# EUROPEAN PATENT SPECIFICATION

(11) **EP 3 738 013 B1**
(45) Date of publication and mention of the grant of the patent: **25.06.2025**
(21) Application number: 18714996.8
(22) Date of filing: 21.03.2018
(51) Int. Cl.: G06F 1/16, E05D 3/06, H04M 1/02

(54) **HINGE ASSEMBLY FOR A FOLDABLE ELECTRONIC DEVICE**
SCHARNIERANORDNUNG FÜR EINE KLAPPBARE ELEKTRONISCHE VORRICHTUNG
ENSEMBLE CHARNIÈRE POUR UN DISPOSITIF ÉLECTRONIQUE PLIABLE

(43) Date of publication of application: 18.11.2020
(73) Proprietor: HUAWEI TECHNOLOGIES CO., LTD., Shenzhen, Guangdong 518129 (CN)
(72) Inventor: HEISKANEN, Juuso, 164 40 Kista (SE)
(74) Representative: Isarpatent
(86) International application number: PCT/EP2018/057168
(87) International publication number: WO 2019/179616

(56) References cited:
- CN-U- 205 446 377
- US-A1- 2015 131 222
- US-A1- 2016 147 267
- US-A1- 2017 094 775
- US-A1- 2017 227 994
- US-A1- 2017 287 385
- US-B1- 9 677 308

## Description

### TECHNICAL FIELD

The invention relates to a hinge assembly comprising a first row of hinge plates and a second row of hinge plates being offset in relation to the first row of hinge plates such that a hinge plate of the second row partially overlaps a hinge plate of the first row.

### BACKGROUND

The size of electronic devices, such as tablets and mobile phones, is an important consideration when designing electronic devices. The user oftentimes requests the outer dimensions of the device to be as small as possible while still providing an as large as possible display.

This problem may be solved by means of a foldable electronic device such as that of US 9,071,673, which discloses an electronic device comprising multiple housings interconnected by means of hinges and covered by one large display. The multiple housings, and the display, can be folded together to provide an as small device as possible, and unfolded to provide an as large display as possible.

The multiple housings are connected by means of hinge modules, which are configured to fold the multiple housings in such a way that the display is invisible, and hence the electronic device unusable, when the electronic device is in a folded configuration. Furthermore, the hinge modules of US 9,071,673 are bulky, complex, and comparatively heavy.

US 2017/0287385 A1 relates to an electronic device including a flexible support apparatus serving as a hinge assembly comprising connecting members in a first row, connecting members in a a second row, a first and second sliding shaft and an intermediate sliding shaft. The first and second connecting members partially overlap each other and the connecting members of the second row are pivotally connected to at least one first row connecting members. The first and second sliding shafts pass through the connecting members so that the neighbouring connecting member can fold around the first or second sliding shaft. This document also discloses that the electronic device is foldable and comprises a first sub-portion and a second sub-frame portion as well as a foldable display. The first and the second sub-portions are pivotable to each other and the second sub-portion overlaps the first sub-portion when folded to a folded position. US 2017/094775 A1 discloses another electronic device having a similar connecting structure.

### SUMMARY

It is an object of the present invention to provide an improved hinge assembly for a foldable electronic device that allows to achieve more flexibility in an adjustment of folding/unfolding characteristics of the hinge assembly, as well as a foldable electronic device including such a hinge assembly. This object is achieved by a hinge assembly according to the independent claim 1 and by a foldable electronic device according to claim 9. Further advantageous embodiments and improvements of the present invention are listed in the dependent claims. Hereinafter, before coming to a detailed description of the embodiments of the invention with reference to the attached drawings, some aspects of the invention which contribute to the understanding of the invention are summarized below. However, it should be noted that the invention is defined by the attached claim and any aspects or examples which are not covered by these claims are also to be understood as constituting merely aspects contributing to the understanding to the invention.

According to a first aspect, there is provided a hinge assembly comprising a first row of hinge plates, a second row of hinge plates, a support rod, a pivot rod, the second row of hinge plates being offset in relation to the first row of hinge plates such that a hinge plate of the second row only partially overlaps a hinge plate of the first row, each hinge plate of the second row being pivotally connected to at least one neighboring hinge plate of at least one first row by means of a pivot rod, forming an interconnected hinge plate set,
wherein each support rod passes through a hinge plate of an interconnected hinge plate set and borders the neighboring hinge plate of the interconnected hinge plate set, so that the neighboring hinge plate can fold around the support rod passing through the hinge plate of the interconnected hinge plate set.

Such a solution allows for a hinge assembly which has as small outer dimensions as possible, while having a range of motion which allows, e.g., two components interconnected by the hinge assembly, such as two electronic device frame sections, to be moved between an unfolded position, in which the frame sections extend to provide a maximum electronic device width, and a folded position in which the two sections are superimposed onto each other such that they extend to provide only a minimum electronic device width. Furthermore, the solution provides support to any components which extend the two interconnected components across the hinge assembly.

In a possible implementation form of the first aspect, at least one first support rod passing through a hinge plate of a first row is arranged between two neighboring hinge plates of the second row so that the hinge plates of the second row can fold around the first support rod, and at least one second support rod passing through a hinge plate of a second row is arranged between two neighboring hinge plates of the first row so that the hinge plates of the first row can fold around the second support rod, facilitating a hinge assembly which has an as small width as possible while still allowing the hinge to fold the components, which the hinge assembly interconnects, completely together.

In a further possible implementation form of the first aspect,
the hinge plate of one row comprises at least one edge notch arranged to accommodate the support rod passing through a hinge plate of a neighboring row, such that the support rod and the hinge plate interlock when the hinge plate is unfolded around the support rod, allowing the hinge assembly to be locked in the unfolded position.

In a further possible implementation form of the first aspect,
the center axes of two neighboring support rods, connected to the hinge plates of one interconnected hinge plate set, are arranged at the same distance from the center axes of the pivot rod which interconnects the hinge plates of the interconnected hinge plate set regardless of whether a hinge plate is folded or unfolded around a support rod, such that any components which extend across the hinge assembly are not stretched beyond their limitations during folding.

In a further possible implementation form of the first aspect,
each hinge plate is tapered from a base section to an apex section, the apex sections of the hinge plates being moved towards each other when at least one hinge plate is being folded around a support rod, facilitating a hinge assembly which takes up minimal space and which is inherently stable when being folded together.

In a further possible implementation form of the first aspect,
each hinge plate is connected to one support rod and two pivot rods, the support rod being arranged closer to the apex section of the hinge plate than the pivot rods, allowing the hinge assembly to be folded together in one direction while being not foldable in the opposite direction.

In a further possible implementation form of the first aspect,
the support rod comprises an axial center section and two axial end sections, the axial center section having larger outer dimensions than the axial end sections, providing secure attachment for the hinge plates in the longitudinal direction of the support rod such that a component supported by the support rods is not accidentally compressed due to movement of the hinge plates.

In a further possible implementation form of the first aspect,
each interconnected hinge plate set comprises at least one through-going passage extending through the hinge plates of the interconnected hinge plate set and accommodate a pivot rod, the through-going passage having variable inner dimensions allowing the pivot rod to spring, and subsequently an edge of a hinge plate to slide across the periphery of a support rod as the hinge plate is folded or unfolded around the support rod, allowing the pivot rods to bend slightly and hence the hinge assembly to be folded or unfolded.

In a further possible implementation form of the first aspect,
the hinge plate of one row comprises at least one further edge notch arranged to accommodate the support rod passing through a hinge plate of a neighboring row, such that the support rod and the hinge plate interlock when the hinge plate is folded around the support rod, allowing the hinge assembly to be locked in the folded position.

In a further possible implementation form of the first aspect,
the hinge plate comprises of at least two sheets of metal and a locking spring, the locking spring being interspersed between the metal sheets and carried by the support rod and pivot rod connected to the hinge plate, the edge notch being arranged in the locking spring, allowing the hinge assembly to be folded and unfolded without the pivot rod having to bend.

According to a second aspect, there is provided a foldable electronic device comprising a first frame section and at least one second frame section, a foldable display attached to a front face of the first frame section and a front face of the second frame section, a hinge assembly according to the above, the hinge assembly connecting the first frame section to the second frame section such that the first frame section and the second section are pivotable relative each other, the second frame section being superimposed on the first frame section when pivoted to a folded end position,
the front face of the second frame section being aligned with the front face of the first frame section when pivoted to an unfolded end position. A foldable electronic device provided with a hinge assembly according to the present disclosure has a range of motion which allows the frame sections of the electronic device to be moved between an unfolded position, in which the electronic device has a maximum width, and a folded position in which the two sections are superimposed onto each other such that the electronic device has a minimum width. Furthermore, the solution provides support to the display which extends from one frame section to the other frame section, across the hinge assembly.

In a possible implementation form of the second aspect, a distance between a center axis of the support rod and center axes of the pivot rods, connected to a hinge plate, is such that a neutral axis of the foldable display extends as close to the center axis of the pivot rods as possible, hence minimizing the stress on the display during folding.

In a further possible implementation form of the second aspect, any misalignment between the neutral axis of the foldable display and the center axes of the pivot rods is compensated for by means of adjusting the distance between the center axes of the pivot rods and the center axis of the support rod, allowing the display to be arranged on the frame sections in a position wherein the stress on the display during folding is minimal.

In a further possible implementation form of the second aspect, the foldable electronic device further comprises a spring mechanism arranged between each frame section and each hinge assembly, allowing a distance between the first frame section and the second frame sections, and hence the stress on the display, to vary when necessary.

In a further possible implementation form of the second aspect, the foldable electronic device further comprises a flexible support sheet arranged to support a folding section of the foldable display, the support rod(s) being arranged to support the flexible support sheet.

This and other aspects will be apparent from the embodiments described below.

### BRIEF DESCRIPTION OF THE DRAWINGS

In the following detailed portion of the present disclosure, the aspects, embodiments, and implementations will be explained in more detail with reference to the example embodiments shown in the drawings, in which:
Fig. 1 shows a side view of a hinge assembly in accordance with one embodiment of the present invention;
Fig. 2 shows a perspective view of the embodiment of Fig. 1;
Fig. 3a shows a side view of a hinge assembly in accordance with a further embodiment of the present invention, the hinge assembly being in an unfolded position;
Fig. 3b shows the embodiment of Fig. 3b in a folded position;
Fig. 4 shows the embodiment of Figs. 3a and 3b in further detail;
Fig. 5 shows a cross-sectional perspective view of a hinge assembly in accordance with a further embodiment of the present invention;
Fig. 6 shows a cross-sectional top view of a hinge assembly in accordance with a further embodiment of the present invention;
Fig. 7a shows a perspective view of a hinge assembly in accordance with a further embodiment of the present invention;
Fig. 7b shows a cross-sectional perspective view of the embodiment of Fig. 7a;
Fig. 8 shows a perspective view of an interconnected hinge plate set in accordance with one embodiment of the present invention;
Fig. 9 shows a schematic side view of a hinge plate and a support rod in accordance with one embodiment of the present invention, the support rod being arranged in first and second edge notches, respectively;
Fig. 10a shows a schematic side view of an interconnected hinge plate set in accordance with one embodiment of the present invention, the hinge plate set being in an unfolded position;
Fig. 10b shows the embodiment of Fig. 10b in a folded position;
Fig. 11a shows a perspective view of a foldable electronic device in accordance with one embodiment of the present invention, the foldable electronic device being in an unfolded position;
Fig. 11b shows the embodiment of Fig. 11a, the foldable electronic device being in a folded position;
Fig. 12 shows a perspective view of a hinge assembly in accordance with one embodiment of the present invention;
Fig. 13a shows a cross-sectional side view of a foldable electronic device in accordance with one embodiment of the present invention;
Fig. 13b shows a cross-sectional side view of a foldable electronic device in accordance with a further embodiment of the present invention;
Fig. 14 shows a perspective view of a support rod in accordance with one embodiment of the present invention;
Fig. 15 shows a cross-sectional side view of a foldable electronic device in accordance with an embodiment of the present invention;
Fig. 16a shows a cross-sectional side view of a foldable electronic device in accordance with one embodiment of the present invention, the foldable electronic device being in an unfolded position;
Fig. 16b shows the embodiment of Fig. 16a, the foldable electronic device being in a folded position.

### DETAILED DESCRIPTION

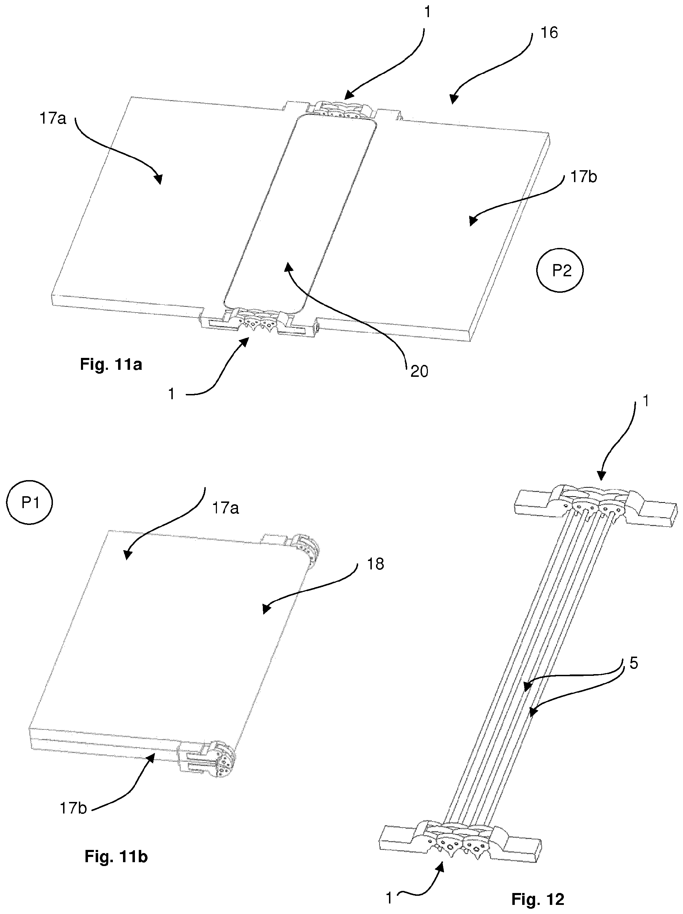

Figs. 11a and 11b show a foldable electronic device 16 comprising a first frame section 17a and a second frame section 17b. A hinge assembly 1, shown more clearly in Fig. 12, connects the first frame section 17a to the second frame section 17b such that the first frame section 17a and the second frame section 17b are pivotable relative each other, between a folded end position P1 and an unfolded end position P2. In the folded end position P1, shown in Fig. 11b, the second frame section 17b is superimposed on the first frame section 17a. In the unfolded end position P2, shown in Fig. 11a, the front face of the second frame section 17b is aligned with the front face of the first frame section 17a.

The foldable electronic device 16 further comprises a foldable display 18, attached to the front face of the first frame section 17a and the front face of the second frame section 17b, and extending across the hinge assembly 1.

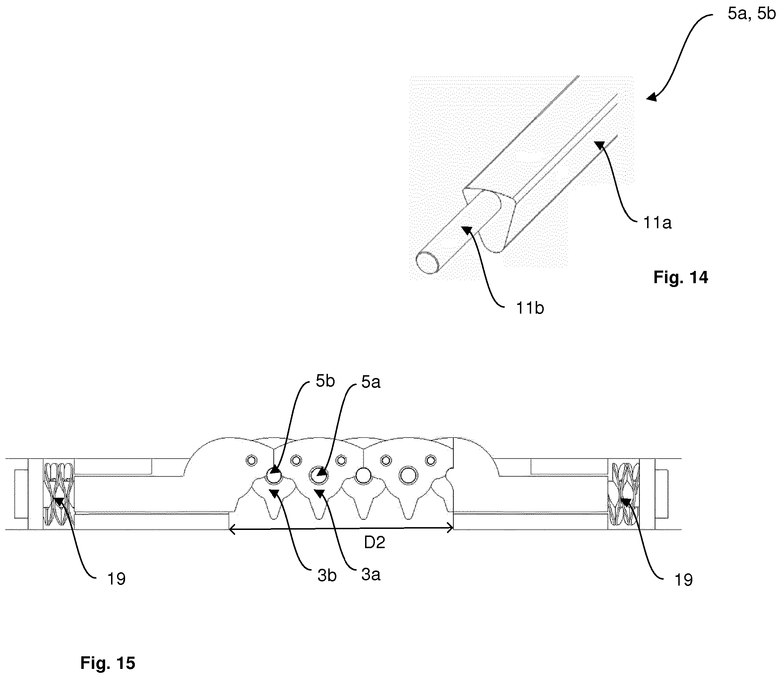

In one embodiment, the foldable electronic device 16 further comprises a spring mechanism 19, shown in Fig. 15, which is arranged between the first frame section 17a and the hinge assembly 1, as well as a spring mechanism 19 arranged between the second frame section 17b and the hinge assembly 1. The flexible spring mechanism 19 allows the distance D2 between the first frame section 17a and second frame section 17b to vary slightly, reducing the stress on the foldable display 18 as it is being folded or unfolded.

The first frame section 17a may be a hollow housing which comprises the internal components of the foldable electronic device 16, such as battery, circuit board, etc., and the second frame section 17b may be either a similar hollow housing or a solid support plate. Furthermore, the foldable electronic device 16 may comprise two second frame sections 17b, one arranged at each longitudinal edge of the first frame section 17a.

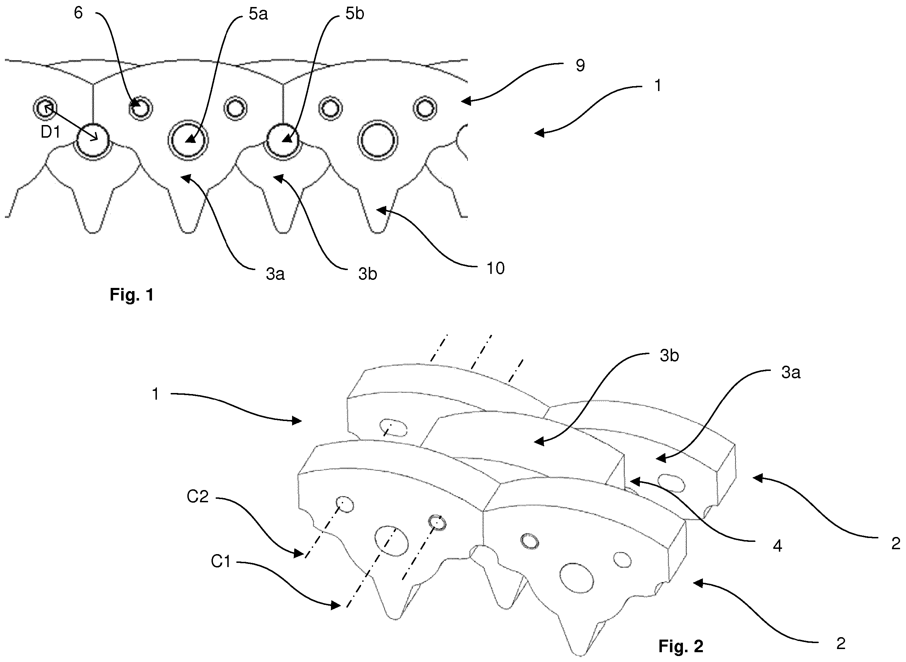

The hinge assembly 1, shown in, e.g. Figs. 1 and 12, comprises at least one support rod 5, which, when mounted in a foldable electronic device 16, extends in parallel with the longitudinal edges of the first frame section 17a and the second frame section 17b, and is adapted for supporting the foldable section of the electronic device 16, e.g. the foldable display 18, as it extends across the gap between the first frame section 17a and the second frame section 17b. The support rods 5 may support the display 18 directly, or support a flexible support sheet 20 arranged to, in turn, support the foldable section of the foldable display 18.

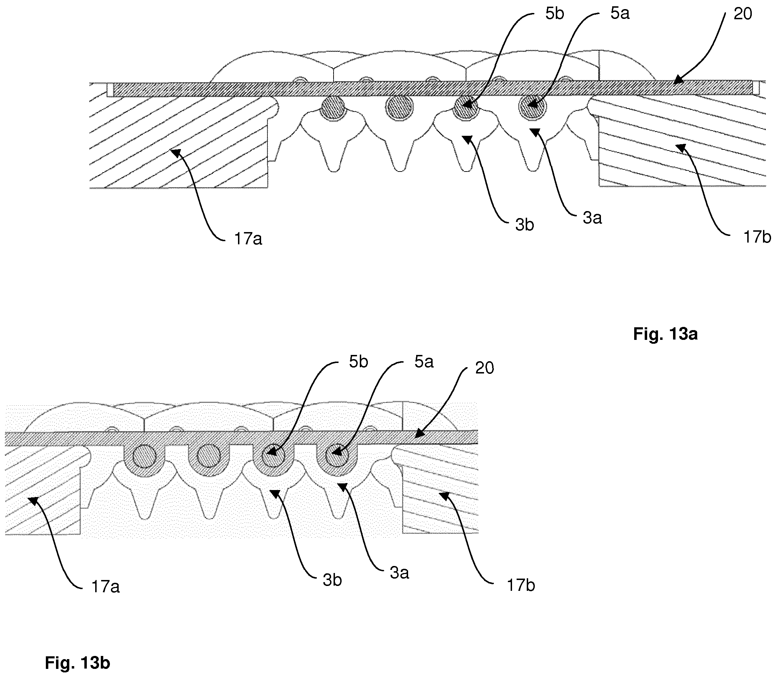

The flexible support sheet, shown in Fig. 11a, may rest on the support rods, as shown in Fig. 13a, or may enclose the support rods, as shown in Fig. 13b, in which case the support rods are either assembled separately onto the flexible support sheet 20 or insert molded together with the flexible support sheet 20. The flexible support sheet 20 is preferably made of elastomer or flexible metal.

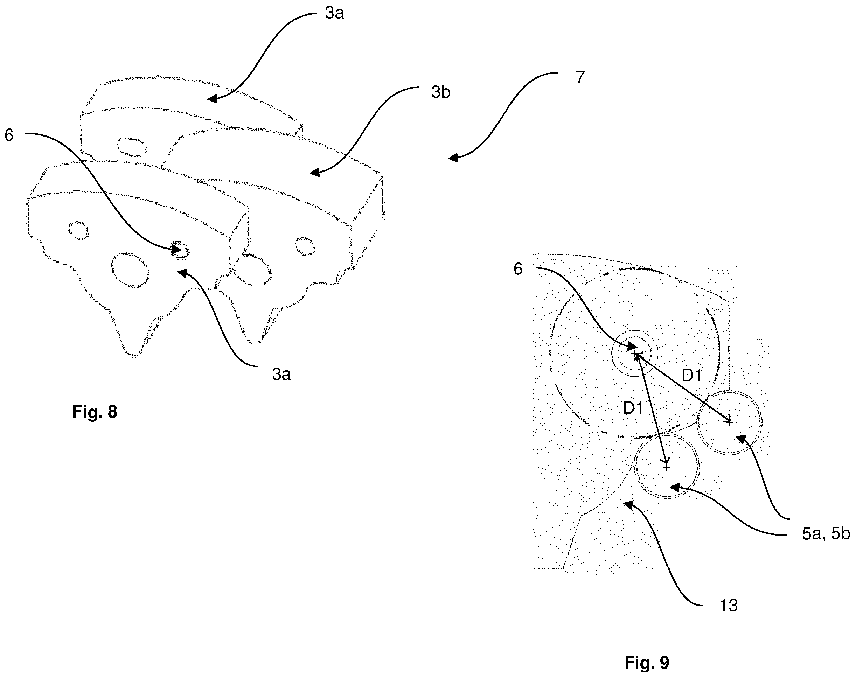

In addition to the support rods 5, the hinge assembly 1 comprises at least one first row 2 of hinge plates 3a, at least one second row 4 of hinge plates 3b, and at least one pivot rod 6, as shown in Figs. 1, 3a, 3b, and 5. The second row 4 of hinge plates 3b is offset in relation to the first row 2 of hinge plates 3a such that a hinge plate 3b of the second row 4 only partially overlaps a hinge plate 3a of the first row 2. Furthermore, each hinge plate 3b of the second row 4 is pivotally connected to at least one neighboring hinge plate 3a of at least one first row 2 by means of a pivot rod 6, forming an interconnected hinge plate set 7 as shown in Fig. 8. Fig. 8 shows two hinge plates 3a and one hinge plate 3b, but any number of hinge plates 3a of the first row 2 and any number of hinge plates 3b of the second row 4 is possible.

The hinge assembly 1 may comprise only one first row 2 of hinge plates 3a and only one second row 4 of hinge plates 3b. The hinge assembly 1 may also comprise two first rows 2 of hinge plates 3a and only one second row 4 of hinge plates 3b, as shown in Figs. 2, 5, 6, 7b, and 8, in which case the second row 4 of hinge plates 3b is arranged between the two first rows 2 of hinge plates 3a. The hinge assembly 1 may also comprise multiple first rows 2 of hinge plates 3a as well as multiple second rows 4 of hinge plates 3b. The rows 2, 4 may be arranged such that every second row is a first row 2 of hinge plates 3a and every other row is a second row 4 of hinge plates 3b. The rows 2, 4 may also be arranged such that two or more adjacent rows are first rows 2 of hinge plates 3a and the next two or more adjacent rows are second rows 4 of hinge plates 3b. For the sake of simplicity, the description below will refer to an embodiment comprising one or two first rows 2 of hinge plates 3a and one second row 4 of hinge plates 3b between, however, the description below is applicable to all possible embodiments.

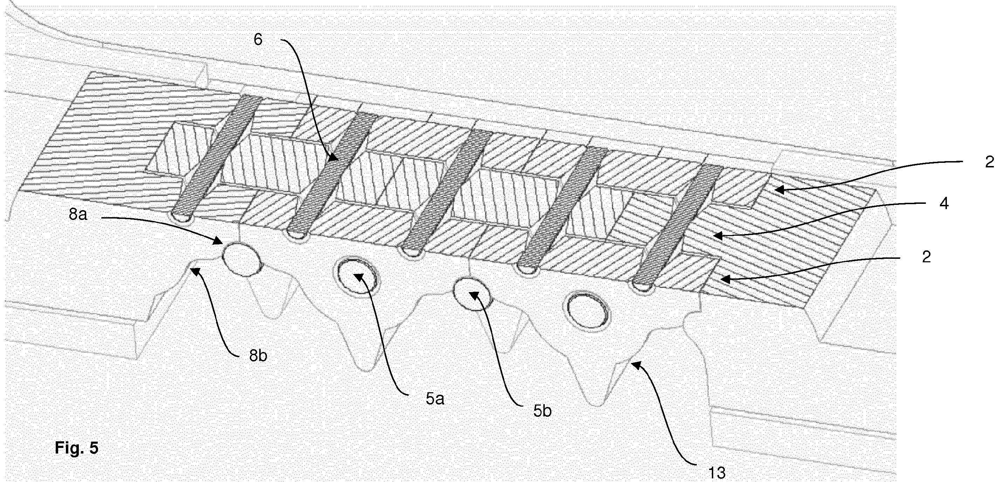

Each hinge plate 3a, 3b of the hinge assembly 1 may be connected to two neighboring hinge plates 3b, 3a of at least one neighboring row, to one neighboring hinge plate 3b, 3a of a neighboring row and the first frame section 17a or the second frame section 17b, or to the first frame section 17a and the second frame section 17b. The latter is shown, e.g., in Figs. 5, 13a, 13b, and 16a.

The embodiment shown in Fig. 8, shows an interconnected hinge plate set 7 comprising two hinge plates 3a of first rows 2, a neighboring hinge plate 3b of the second row 4, and a pivot rod 6 pivotally connecting the three hinge plates. In such an embodiment, each support rod 5a will pass through two hinge plates 3a, and each support rod 5b will pass through one hinge plate 3b. Each support rod 5a, 5b will border at least one neighboring hinge plate 3b, 3a of the interconnected hinge plate set 7. Hence, the neighboring hinge plate 3b, 3a can fold around the support rod 5a, 5b passing through the hinge plate 3a, 3b of the interconnected hinge plate set 7.

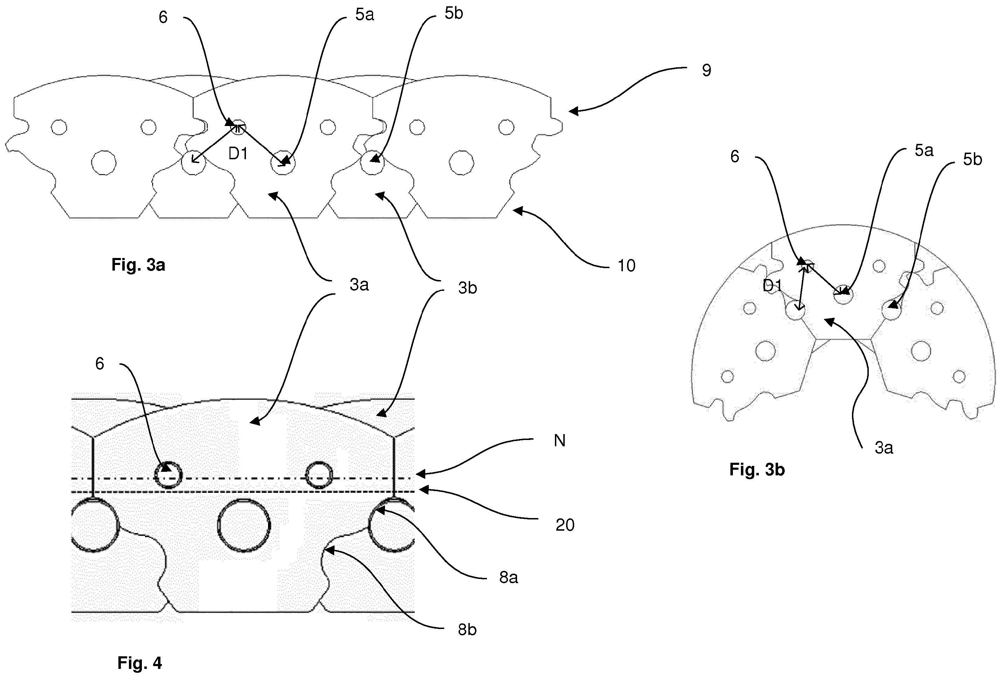

This is shown more clearly in Fig. 3b, which shows two hinge plates 3a of the first rows 2 being folded around one support rod 5b of the second row 4. Fig. 3a shows the same embodiment when the foldable electronic device 16, and hence the hinge assembly 1, is unfolded, i.e. the frame sections 17a, 17b of the electronic device extend in one and the same main plane.

As shown in Fig. 5, a first support rod 5a, passing through a hinge plate 3a of a first row 2, is arranged between two neighboring hinge plates 3b of the second row 4 so that the hinge plates 3b of the second row 4 can fold around the first support rod 5a, and a second support rod 5b, passing through a hinge plate 3b of a second row 4, is arranged between two neighboring hinge plates 3a of the first row 2 so that the hinge plates 3a of the first row 2 can fold around the second support rod 5b.

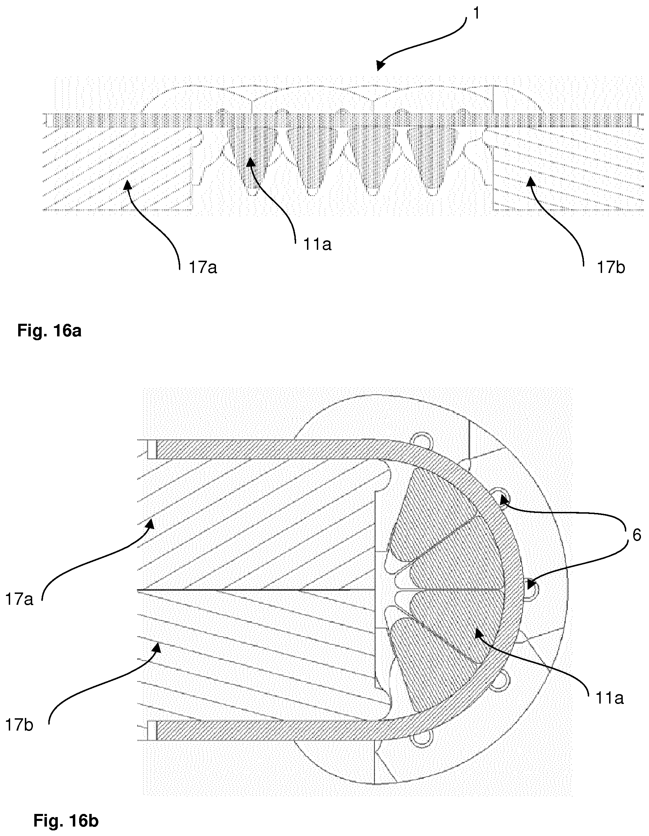

Each support rod 5a, 5b comprises an axial center section 11a and two axial end sections 11b, the axial center section 11a preferably having larger outer dimensions than the axial end sections 11b as shown in Fig. 14. The axial sections 11a, 11b of the support rod 5a, 5b may be cylindrical. The axial center section 11a of the support rod 5a, 5b may also be tapered from the base section 9 to the apex section 10, as shown in Figs. 14, 16a, and 16b. The widest outer surface of the base section 9 may be convex such that all neighboring support rods 5a, 5b together form a semicircular surface when the hinge plates 3a, 3b have been folded around the support rods 5a, 5b, as shown in Fig. 16b. The tapered shape may be achieved, e.g., by machining a metal rod or by molding plastic over a cylindrical metal rod.

As shown in Figs. 1 and 3b, each hinge plate 3a, 3b is tapered from a base section 9 to an apex section 10, the hinge plates 3a, 3b being arranged such that the apex sections 10 of the hinge plates 3a, 3b are moved towards each other when at least one hinge plate 3a, 3b is folded around a support rod 5b, 5a. Each individual hinge plate 3a, 3b is connected to one support rod 5a, 5b and two pivot rods 6, the support rod 5a, 5b being arranged closer to the apex section 10 of the hinge plate 3a, 3b than the pivot rods 6.

Acccording to the invention, each hinge plate 3a, 3b of one row 2, 4 comprises at least one edge notch 8a arranged to accommodate the support rod 5b, 5a passing through a hinge plate 3b, 3a of a neighboring row 4, 2, as shown in Figs. 4 and 5. The edge notch 8a allows the support rod 5b, 5a and the hinge plate 3a, 3b to interlock when the hinge plate 3a, 3b is unfolded around the support rod 5b, 5a, i.e., when the foldable electronic device 16 is in the unfolded end position P2.

Each hinge plate 3a, 3b of one row 2, 4 may further comprise at least one further edge notch 8b also arranged to accommodate the support rod 5b, 5a passing through a hinge plate 3b, 3a of a neighboring row 4, 2. The edge notch 8b allows the support rod 5b, 5a and the hinge plate 3a, 3b to interlock when the hinge plate 3a, 3b is folded around the support rod 5b, 5a, i.e., when the foldable electronic device 16 is in the folded end position P1.

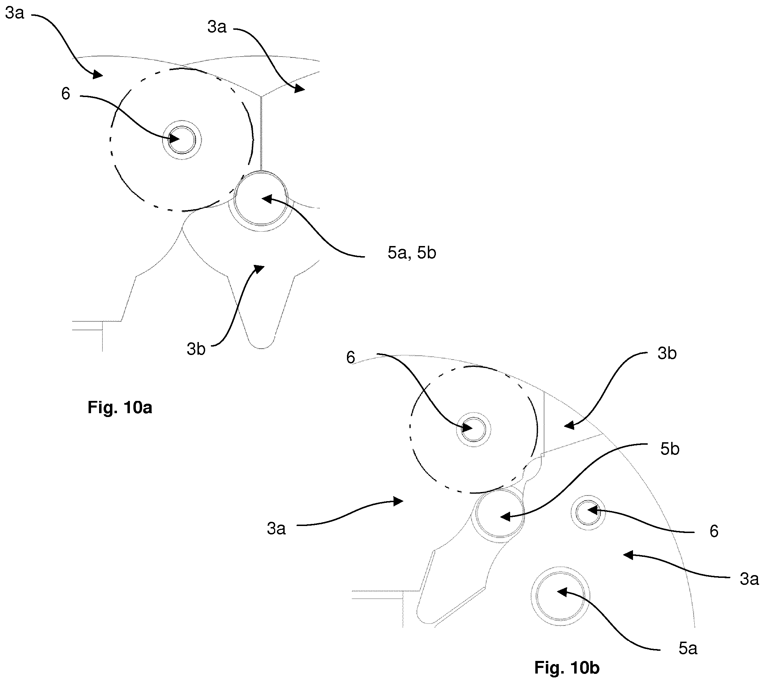

The edge notches 8a, 8b, the support rods 5a, 5b and their interrelated positions are shown more clearly in Fig. 9, as well as Fig. 10a, which shows the foldable electronic device 16 in the unfolded end position P2, and Fig. 10b, which shows the foldable electronic device 16 in the folded end position P1. Figs. 9, 10a, and 10b also show the circle of rotation along which the support rods 5a, 5b move, except for when the protrusion formed between the two edge notches 8a, 8b slides across the support rods 5a, 5b.

At least one edge of each hinge plate 3a, 3b may further comprise at least one of a tooth or a recess, such that neighboring hinge plates 3a, 3b of one row 2,4 form a synchronized gear mechanism. Such a gear mechanism is shown in Figs. 3a and 3b.

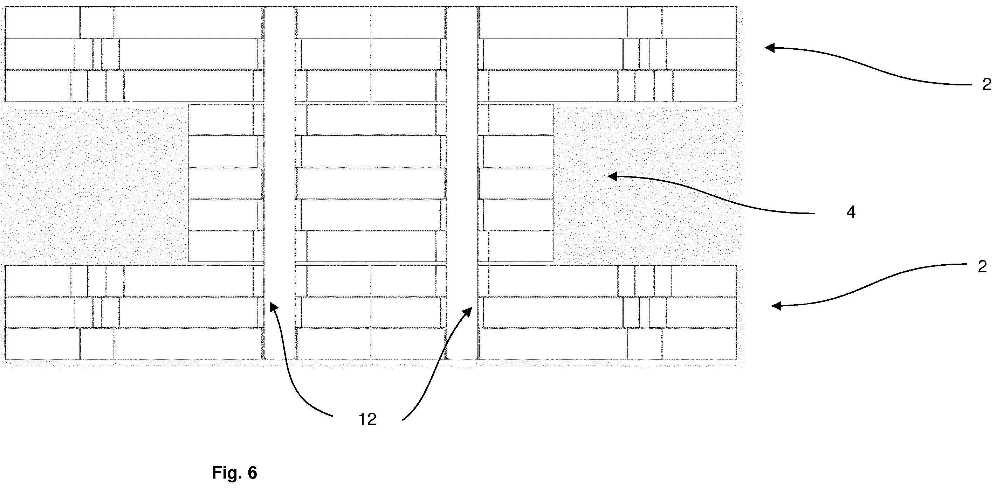

Each interconnected hinge plate set 7 comprises at least one through-going passage 12 which extends through the hinge plates 3a, 3b of the interconnected hinge plate set 7 and accommodates a pivot rod 6. The through-going passage 12 may have the same inner dimensions throughout, or it may have variable inner dimensions as shown in Figs. 5 and 6. Such variable inner dimensions, e.g. provided by chamfering the through-going passage 12, allows sufficient space for the pivot rod 6 to bend within the hinge assembly 1 which subsequently provides the resilience needed for an edge 13 of a hinge plate 3a, 3b to slide across the periphery of a support rod 5b, 5a as the hinge plate 3a, 3b is being folded or unfolded around the support rod 5b, 5a.

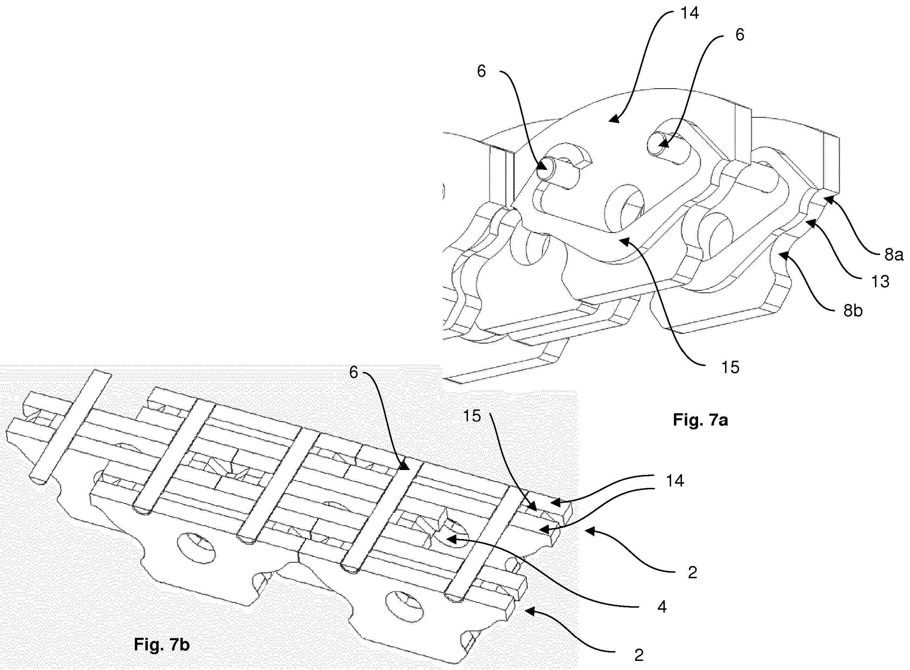

The hinge plate 3a, 3b may be made in one integral piece, or according to the invention it comprises of at least two sheets 14 of metal, e.g. stamped metal sheets. In the latter case, according to the invention a locking spring 15 is interspersed between the metal sheets 14 and carried by the support rod 5a, 5b and the pivot rods 6 connected to the hinge plate 3a, 3b, as shown in Figs. 7a and 7b. The opposing ends of the locking spring 15 are hook-shaped such that they partially surround and connect with the pivot rods 6, while the middle section of the locking spring 15 is pulled in a direction away from the pivot rods, and hence the ends of the locking spring 15, by the support rod 5a, 5b. The edge notches 8a, 8b are arranged in the locking spring 15. In this embodiment, the pivot rod 6 does not need to bend as the hinge plate 3a, 3b is being folded or unfolded around the support rod 5b, 5a, but rather, the locking spring 15 is sufficiently resilient to allow said folding and unfolding.

The center axes C1 of two neighboring support rods 5a, 5b, connected to the hinge plates 3a, 3b of one interconnected hinge plate set 7, are arranged at the same distance D1 from the center axis C2 of the pivot rod 6 which interconnects the hinge plates 3a, 3b of the interconnected hinge plate set 7 regardless of whether a hinge plate 3a, 3b is folded, as shown in Fig. 3b, or unfolded, see Fig. 3a, around a support rod 5b, 5a.

The distance D1 between the center axis C1 of the support rod 5a, 5b and the center axis C2 of the pivot rod 6, connected to a hinge plate 3a, 3b, is such that a neutral axis N of the foldable display 18 extends as close to the center axis C2 of the pivot rod 6 as possible, as shown in Fig. 4. The neutral axis N corresponds to the section of display in which the stress on the display during folding is minimized. The neutral axis N of the foldable display 16 may correspond to the center line of the foldable display 18, however, it may also extend in parallel with, at a distance from, the center line of the foldable display 18. Any misalignment between the neutral axis N of the foldable display 18 and the center axes C2 of the pivot rods 6 is compensated for by means of adjusting the distance D1 between the center axis C2 of the pivot rod 6 and the center axis C1 of the support rod 5a, 5b.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope.

## Claims

1. A hinge assembly (1), comprising:
- at least one first row (2) of hinge plates (3a),
- at least one second row (4) of hinge plates (3b),
- a plurality of support rods (5a, 5b),
- a plurality of pivot rods (6),
- the support rods (5b) passing through the hinge plates (3b) of the second row (4) of hinge plates (3b) being offset in relation to the support rods (5a) passing through the hinge plates (3a) of the first row (2) of hinge plates (3a) such that a hinge plate (3b) of the second row (4) only partially overlaps a hinge plate (3a) of the first row (2),
- each hinge plate (3b) of the second row (4) being pivotally connected to at least one neighboring hinge plate (3a) of at least one first row (2) by means of one of said pivot rods (6), forming in this way an interconnected hinge plate set (7),
- wherein each support rod (5a, 5b) passes through a hinge plate (3a, 3b) of an interconnected hinge plate set (7) and borders the neighboring hinge plate (3b, 3a) of the interconnected hinge plate set (7), so that the neighboring hinge plate (3b, 3a) can fold around the support rod (5a, 5b) passing through the hinge plate (3a, 3b) of the interconnected hinge plate set (7);
**characterised in that**
- each hinge plate (3a, 3b) of one row (2, 4) comprises at least one edge notch (8a) arranged to accommodate the support rod (5b, 5a) passing through a hinge plate (3b, 3a) of a neighboring row (4, 2), such that the support rod (5b, 5a) and the hinge plate (3a, 3b) interlock when the hinge plate (3a, 3b) is unfolded around the support rod (5b, 5a); and
- each hinge plate (3a, 3b) comprises two sheets (14) of metal and a locking spring (15), the locking spring (15) being interspersed between said two metal sheets (14) and carried by the support rod (5a, 5b) and pivot rod (6) connected to the hinge plate (3a, 3b), wherein the opposing ends of the locking spring (15) are hook-shaped such that they partially surround and connect with the pivot rods (6), while the middle section of the locking spring (15) is configured to be pulled in a direction away from the pivot rods, and hence the ends of the locking spring (15), by the support rod (5a, 5b), the edge notch (8a, 8b) being arranged in the locking spring (15).

2. The hinge assembly (1) according to claim 1, wherein at least one first support rod (5a) passing through a hinge plate (3a) of a first row (2) is arranged between two neighboring hinge plates (3b) of the second row (4) so that the hinge plates (3b) of the second row (4) can fold around the first support rod (5a), and at least one second support rod (5b) passing through a hinge plate (3b) of a second row (4) is arranged between two neighboring hinge plates (3a) of the first row (2) so that the hinge plates (3a) of the first row (2) can fold around the second support rod (5b).

3. The hinge assembly (1) according to any one of the previous claims, wherein the center axes (C1) of two neighboring support rods (5a, 5b), connected to the hinge plates (3a, 3b) of one interconnected hinge plate set (7), are arranged at the same distance (D1) from the center axis (C2) of the pivot rod (6) which interconnects the hinge plates (3a, 3b) of the interconnected hinge plate set (7) regardless of whether a hinge plate (3a, 3b) is folded or unfolded around a support rod (5b, 5a).

4. The hinge assembly (1) according to any one of the previous claims, wherein each hinge plate (3a, 3b) is tapered from a base section (9) to an apex section (10), the apex sections (10) of the hinge plates (3a, 3b) being moved towards each other when at least one hinge plate (3a, 3b) is being folded around a support rod (5b, 5a).

5. The hinge assembly (1) according to claim 4, wherein each hinge plate (3a, 3b) is connected to one support rod (5a, 5b) and two pivot rods (6), the support rod (5a, 5b) being arranged closer to the apex section (10) of the hinge plate (3a, 3b) than the pivot rods (6).

6. The hinge assembly (1) according to any one of the previous claims, wherein the support rod (5a, 5b) comprises an axial center section (11a) and two axial end sections (11b), the axial center section (11a) having larger outer dimensions than the axial end sections (11b).

7. The hinge assembly (1) according to any one of the previous claims, wherein each interconnected hinge plate set (7) comprises at least one through-going passage (12) extending through the hinge plates (3a, 3b) of the interconnected hinge plate set (7) and accommodate a pivot rod (6), the through-going passage (12) having variable inner dimensions allowing the pivot rod (6) to spring, and subsequently an edge (13) of a hinge plate (3a, 3b) to slide across the periphery of a support rod (5b, 5a) as the hinge plate (3a, 3b) is folded or unfolded around the support rod (5b, 5a).

8. The hinge assembly (1) according to any one of claims 3 to 7, wherein the hinge plate (3a, 3b) of one row (2, 4) comprises at least one further edge notch (8b) arranged to accommodate the support rod (5b, 5a) passing through a hinge plate (3b, 3a) of a neighboring row (4, 2), such that the support rod (5b, 5a) and the hinge plate (3a, 3b) interlock when the hinge plate (3a, 3b) is folded around the support rod (5b, 5a).

9. A foldable electronic device (16) comprising
- a first frame section (17a) and at least one second frame section (17b),
- a foldable display (18) attached to a front face of the first frame section (17a) and a front face of the second frame section (17b),
- a hinge assembly (1) according to anyone of claims 1 to 8,
- the hinge assembly (1) connecting the first frame section (17a) to the second frame section (17b) such that the first frame section (17a) and the second frame section (17b) are pivotable relative each other,
the second frame section (17b) being superimposed on the first frame section (17a) when pivoted to a folded end position (P1),
the front face of the second frame section (17b) being aligned with the front face of the first frame section (17a) when pivoted to an unfolded end position (P2).

10. The foldable electronic device (16) according to claim 9, wherein a distance (D1) between a center axis (C1) of the support rod (5a, 5b) and center axes (C2) of the pivot rods (6), connected to a hinge plate (3a, 3b), is such that a neutral axis (N) of the foldable display (18) extends to the center axis (C2) of the pivot rods (6).

11. The foldable electronic device (16) according to claim 10, wherein any misalignment between the neutral axis (N) of the foldable display (18) and the center axes (C2) of the pivot rods (6) is compensatable for by means of adjusting the distance (D1) between the center axes (C2) of the pivot rods (6) and the center axis (C1) of the support rod (5a, 5b).

12. The foldable electronic device (16) according any one of claims 9 to 11, further comprising a spring mechanism (19) arranged between each frame section (17a, 17b) and each hinge assembly (1), allowing a distance (D2) between the first frame section (17a) and second frame section (17b) to vary.

13. The foldable electronic device (16) according to any one of claims 9 to 12, further comprising a flexible support sheet (20) arranged to support a folding section of the foldable display (18), the support rod(s) (5a, 5b) being arranged to support the flexible support sheet (20).

## Patentansprüche

1. Scharnierbaugruppe (1), umfassend:
mindestens eine erste Reihe (2) von Scharnierplatten (3a),
mindestens eine zweite Reihe (4) von Scharnierplatten (3b),
eine Vielzahl von Stützstangen (5a, 5b),
eine Vielzahl von Schwenkstangen (6),
wobei die Stützstangen (5b), welche durch die Scharnierplatten (3b) der zweiten Reihe (4) von Scharnierplatten (3b) verlaufen, in Bezug auf die Stützstangen (5a), welche durch die Scharnierplatten (3a) der ersten Reihe (2) von Scharnierplatten (3a) verlaufen, derart versetzt sind, dass eine Scharnierplatte (3b) der zweiten Reihe (4) eine Scharnierplatte (3a) der ersten Reihe (2) nur teilweise überlappt,
wobei jede Scharnierplatte (3b) der zweiten Reihe (4) durch eine der Schwenkstangen (6) mit mindestens einer benachbarten Scharnierplatte (3a) mindestens einer ersten Reihe (2) schwenkbar verbunden ist und auf diese Weise einen Satz (7) miteinander verbundener Scharnierplatten ausbildet,
wobei jede Stützstange (5a, 5b) durch eine Scharnierplatte (3a, 3b) eines Satzes (7) miteinander verbundener Scharnierplatten verläuft und an die benachbarte Scharnierplatte (3b, 3a) des Satzes (7) miteinander verbundener Scharnierplatten angrenzt, sodass die benachbarte Scharnierplatte (3b, 3a) um die Stützstange (5a, 5b), welche durch die Scharnierplatte (3a, 3b) des Satzes (7) miteinander verbundener Scharnierplatten verläuft, geklappt werden kann;
**dadurch gekennzeichnet, dass**
jede Scharnierplatte (3a, 3b) einer Reihe (2, 4) mindestens eine Randkerbe (8a) aufweist, die angeordnet ist, um die Stützstange (5b, 5a), welche durch eine Scharnierplatte (3b, 3a) einer benachbarten Reihe (4, 2) verläuft, derart aufzunehmen, dass die Stützstange (5b, 5a) und die Scharnierplatte (3a, 3b) ineinandergreifen, wenn die Scharnierplatte (3a, 3b) um die Stützstange (5b, 5a) herum aufgeklappt wird; und
jede Scharnierplatte (3a, 3b) zwei Metallbleche (14) und eine Verriegelungsfeder (15) umfasst, wobei die Verriegelungsfeder (15) zwischen den zwei Metallblechen (14) eingefügt ist und durch die Stützstange (5a, 5b) und die Schwenkstange (6) getragen wird, die mit der Scharnierplatte (3a, 3b) verbunden sind, wobei die gegenüberliegenden Enden der Verriegelungsfeder (15) derart hakenförmig sind, dass sie teilweise die Schwenkstangen (6) umgeben und mit ihnen verbunden sind, während der mittlere Abschnitt der Verriegelungsfeder (15) dazu konfiguriert ist, durch die Stützstange (5a, 5b) in eine Richtung gezogen zu werden, die von den Schwenkstangen, und damit von den Enden der Verriegelungsfeder (15), weg gerichtet ist, wobei die Randkerbe (8a, 8b) in der Verriegelungsfeder (15) angeordnet ist.

2. Scharnierbaugruppe (1) nach Anspruch 1, wobei mindestens eine erste Stützstange (5a), die durch eine Scharnierplatte (3a) einer ersten Reihe (2) verläuft, zwischen zwei benachbarten Scharnierplatten (3b) der zweiten Reihe (4) angeordnet ist, sodass die Scharnierplatten (3b) der zweiten Reihe (4) um die ersten Stützstange (5a) geklappt werden können, und mindestens eine zweite Stützstange (5b), die durch eine Scharnierplatte (3b) einer zweiten Reihe (4) verläuft, zwischen zwei benachbarten Scharnierplatten (3a) der ersten Reihe (2) angeordnet ist, sodass die Scharnierplatten (3a) der ersten Reihe (2) um die zweite Stützstange (5b) geklappt werden können.

3. Scharnierbaugruppe (1) nach einem der vorhergehenden Ansprüche, wobei die Mittelachsen (C1) zweier benachbarter Stützstangen (5a, 5b), die mit den Scharnierplatten (3a, 3b) eines Satzes (7) miteinander verbundener Scharnierplatten verbunden sind, in dem gleichen Abstand (D1) von der Mittelachse (C2) der Schwenkstange (6) angeordnet sind, welche die Scharnierplatten (3a, 3b) des Satzes (7) miteinander verbundener Scharnierplatten miteinander verbindet, unabhängig davon, ob eine Scharnierplatte (3a, 3b) um eine Stützstange (5b, 5a) zusammengeklappt oder aufgeklappt ist.

4. Scharnierbaugruppe (1) nach einem der vorhergehenden Ansprüche, wobei jede Scharnierplatte (3a, 3b) von einem Basisabschnitt (9) zu einem Scheitelabschnitt (10) hin verjüngt ist, wobei die Scheitelabschnitte (10) der Scharnierplatten (3a, 3b) aufeinander zu bewegt werden, wenn mindestens eine Scharnierplatte (3a, 3b) um eine Stützstange (5b, 5a) herum zusammengeklappt ist.

5. Scharnierbaugruppe (1) nach Anspruch 4, wobei jede Scharnierplatte (3a, 3b) mit einer Stützstange (5a, 5b) und zwei Schwenkstangen (6) verbunden ist, wobei die Stützstange (5a, 5b) näher an dem Scheitelabschnitt (10) der Scharnierplatte (3a, 3b) als den Schwenkstangen (6) angeordnet ist.

6. Scharnierbaugruppe (1) nach einem der vorhergehenden Ansprüche, wobei die Stützstange (5a, 5b) einen axialen Mittelabschnitt (11a) und zwei axiale Endabschnitte (11b) umfasst, wobei der axiale Mittelabschnitt (11a) größere Außenabmessungen als die axialen Endabschnitte (11b) aufweist.

7. Scharnierbaugruppe (1) nach einem der vorhergehenden Ansprüche, wobei jeder Satz (7) miteinander verbundener Scharnierplatten mindestens einen Durchgangskanal (12), der sich durch die Scharnierplatten (3a, 3b) des Satzes (7) miteinander verbundener Scharnierplatten erstreckt, aufweist und eine Schwenkstange (6) aufnimmt, wobei der Durchgangskanal (12) variable Innenabmessungen aufweist, die ein Federn der Schwenkstange (6) und anschließend ein Gleiten einer Kante (13) einer Scharnierplatte (3a, 3b) über den Umfang einer Stützstange (5b, 5a) zulassen, während die Scharnierplatte (3a, 3b) um die Stützstange (5b, 5a) herum zusammengeklappt oder aufgeklappt ist.

8. Scharnierbaugruppe (1) nach einem der Ansprüche 3 bis 7, wobei die Scharnierplatte (3a, 3b) einer Reihe (2, 4) mindestens eine weitere Randkerbe (8b) umfasst, die angeordnet ist, um die Stützstange (5b, 5a), welche durch eine Scharnierplatte (3b, 3a) einer benachbarten Reihe (4, 2) verläuft, derart aufzunehmen, dass die Stützstange (5b, 5a) und die Scharnierplatte (3a, 3b) ineinandergreifen, wenn die Scharnierplatte (3a, 3b) um die Stützstange (5b, 5a) herum zusammengeklappt wird.

9. Klappbare elektronische Vorrichtung (16), umfassend
einen ersten Rahmenabschnitt (17a) und mindestens einen zweiten Rahmenabschnitt (17b),
ein klappbares Display (18), das an einer Vorderseite des ersten Rahmenabschnitts (17a) und einer Vorderseite des zweiten Rahmenabschnitts (17b) befestigt ist,
eine Scharnierbaugruppe (1) nach einem der Ansprüche 1 bis 8,
wobei die Scharnierbaugruppe (1) den ersten Rahmenabschnitt (17a) mit dem zweiten Rahmenabschnitt (17b) derart verbindet, dass der erste Rahmenabschnitt (17a) und der zweite Rahmenabschnitt (17b) relativ zueinander schwenkbar sind,
wobei der zweite Rahmenabschnitt (17b) den ersten Rahmenabschnitt (17a) überlagert, wenn er in eine zusammengeklappte Endposition (P1) geschwenkt ist,
wobei die Vorderseite des zweiten Rahmenabschnitts (17b) mit der Vorderseite des ersten Rahmenabschnitts (17a) ausgerichtet ist, wenn er in eine ausgeklappte Endposition (P2) geschwenkt wird.

10. Klappbare elektronische Vorrichtung (16) nach Anspruch 9, wobei ein Abstand (D1) zwischen einer Mittelachse (C1) der Stützstange (5a, 5b) und Mittelachsen (C2) der Schwenkstangen (6), die mit einer Scharnierplatte (3a, 3b) verbunden sind, derart ist, dass sich eine neutrale Achse (N) des klappbaren Displays (18) zu der Mittelachse (C2) der Schwenkstangen (6) erstreckt.

11. Klappbare elektronische Vorrichtung (16) nach Anspruch 10, wobei eine beliebige Fehlausrichtung zwischen der neutralen Achse (N) des klappbaren Displays (18) und den Mittelachsen (C2) der Schwenkstangen (6) durch Einstellen des Abstands (D1) zwischen den Mittelachsen (C2) der Schwenkstangen (6) und der Mittelachse (C1) der Stützstange (5a, 5b) ausgleichsfähig ist.

12. Klappbare elektronische Vorrichtung (16) nach einem der Ansprüche 9 bis 11, ferner umfassend einen Federmechanismus (19), der zwischen jedem Rahmenabschnitt (17a, 17b) und jeder Scharnierbaugruppe (1) angeordnet ist, welches das Variieren eines Abstands (D2) zwischen dem ersten Rahmenabschnitt (17a) und dem zweiten Rahmenabschnitt (17b) zulässt.

13. Klappbare elektronische Vorrichtung (16) nach einem der Ansprüche 9 bis 12, ferner umfassend eine flexible Trägerfolie (20), die angeordnet ist, um einen Klappabschnitt des klappbaren Displays (18) zu stützen, wobei die Trägerstange(n) (5a, 5b) angeordnet ist(sind), um die flexible Trägerfolie (20) zu stützen.

## Revendications

1. Ensemble charnière (1), comprenant :
- au moins une première rangée (2) de plaques de charnière (3a),
- au moins une seconde rangée (4) de plaques de charnière (3b),
- une pluralité de tiges de support (5a, 5b),
- une pluralité de tiges de pivot (6),
- les tiges de support (5b) traversant les plaques de charnière (3b) de la seconde rangée (4) de plaques de charnière (3b) étant décalées par rapport aux tiges de support (5a) traversant les plaques de charnière (3a) de la première rangée (2) de plaques de charnière (3a) de telle sorte qu'une plaque de charnière (3b) de la seconde rangée (4) ne chevauche que partiellement une plaque de charnière (3a) de la première rangée (2),
- chaque plaque de charnière (3b) de la seconde rangée (4) étant reliée de manière pivotante à au moins une plaque de charnière voisine (3a) d'au moins une première rangée (2) au moyen d'une desdites tiges de pivot (6), formant ainsi un ensemble de plaques de charnière interconnectées (7),
- dans lequel chaque tige de support (5a, 5b) traverse une plaque de charnière (3a, 3b) d'un ensemble de plaques de charnière interconnectées (7) et borde la plaque de charnière voisine (3b, 3a) de l'ensemble de plaques de charnière interconnectées (7), de sorte que la plaque de charnière voisine (3b, 3a) peut se replier autour de la tige de support (5a, 5b) traversant la plaque de charnière (3a, 3b) de l'ensemble de plaques de charnière interconnectées (7) ;
caractérisé en ce
- chaque plaque de charnière (3a, 3b) d'une rangée (2, 4) comprend au moins une encoche de bord (8a) agencée pour recevoir la tige de support (5b, 5a) traversant une plaque de charnière (3b, 3a) d'une rangée voisine (4, 2), de telle sorte que la tige de support (5b, 5a) et la plaque de charnière (3a, 3b) s'imbriquent lorsque la plaque de charnière (3a, 3b) est dépliée autour de la tige de support (5b, 5a) ; et
- chaque plaque de charnière (3a, 3b) comprend deux feuilles (14) de métal et un ressort de verrouillage (15), le ressort de verrouillage (15) étant intercalé entre lesdites deux feuilles de métal (14) et porté par la tige de support (5a, 5b) et la tige de pivot (6) reliées à la plaque de charnière (3a, 3b), dans lequel les extrémités opposées du ressort de verrouillage (15) sont en forme de crochet de telle sorte qu'elles entourent partiellement et se connectent aux tiges de pivot (6), tandis que la section médiane du ressort de verrouillage (15) est configurée pour être tirée dans une direction s'éloignant des tiges de pivot, et donc des extrémités du ressort de verrouillage (15), par la tige de support (5a, 5b), l'encoche de bord (8a, 8b) étant disposée dans le ressort de verrouillage (15).

2. Ensemble charnière (1) selon la revendication 1, dans lequel au moins une première tige de support (5a) traversant une plaque de charnière (3a) d'une première rangée (2) est disposée entre deux plaques de charnière (3b) voisines de la seconde rangée (4) de sorte que les plaques de charnière (3b) de la seconde rangée (4) peuvent se replier autour de la première tige de support (5a), et au moins une seconde tige de support (5b) traversant une plaque de charnière (3b) d'une seconde rangée (4) est disposée entre deux plaques de charnière (3a) voisines de la première rangée (2) de sorte que les plaques de charnière (3a) de la première rangée (2) peuvent se replier autour de la seconde tige de support (5b).

3. Ensemble charnière (1) selon l'une quelconque des revendications précédentes, dans lequel les axes centraux (C1) de deux tiges de support voisines (5a, 5b), reliées aux plaques de charnière (3a, 3b) d'un ensemble de plaques de charnière interconnectées (7), sont disposés à la même distance (D1) de l'axe central (C2) de la tige de pivot (6) qui relie les plaques de charnière (3a, 3b) de l'ensemble de plaques de charnière interconnectées (7), indépendamment du fait qu'une plaque de charnière (3a, 3b) soit pliée ou dépliée autour d'une tige de support (5b, 5a).

4. Ensemble charnière (1) selon l'une quelconque des revendications précédentes, dans lequel chaque plaque de charnière (3a, 3b) est conique depuis une section de base (9) jusqu'à une section de sommet (10), les sections de sommet (10) des plaques de charnière (3a, 3b) étant déplacées l'une vers l'autre lorsqu'au moins une plaque de charnière (3a, 3b) est pliée autour d'une tige de support (5b, 5a).

5. Ensemble charnière (1) selon la revendication 4, dans lequel chaque plaque de charnière (3a, 3b) est reliée à une tige de support (5a, 5b) et à deux tiges de pivot (6), la tige de support (5a, 5b) étant disposée plus près de la section de sommet (10) de la plaque de charnière (3a, 3b) que les tiges de pivot (6).

6. Ensemble charnière (1) selon l'une quelconque des revendications précédentes, dans lequel la tige de support (5a, 5b) comprend une section centrale axiale (11a) et deux sections d'extrémité axiales (11b), la section centrale axiale (11a) ayant des dimensions extérieures plus grandes que les sections d'extrémité axiales (11b).

7. Ensemble charnière (1) selon l'une quelconque des revendications précédentes, dans lequel chaque ensemble de plaques de charnière interconnectées (7) comprend au moins un passage traversant (12) se prolongeant à travers les plaques de charnière (3a, 3b) de l'ensemble de plaques de charnière interconnectées (7) et recevant une tige de pivot (6), le passage traversant (12) ayant des dimensions intérieures variables permettant à la tige de pivot (6) de rebondir, et ensuite à un bord (13) d'une plaque de charnière (3a, 3b) de glisser sur la périphérie d'une tige de support (5b, 5a) lorsque la plaque de charnière (3a, 3b) est pliée ou dépliée autour de la tige de support (5b, 5a).

8. Ensemble charnière (1) selon l'une quelconque des revendications 3 à 7, dans lequel la plaque de charnière (3a, 3b) d'une rangée (2, 4) comprend au moins une encoche de bord (8b) agencée pour recevoir la tige de support (5b, 5a) traversant une plaque de charnière (3b, 3a) d'une rangée voisine (4, 2), de telle sorte que la tige de support (5b, 5a) et la plaque de charnière (3a, 3b) s'imbriquent lorsque la plaque de charnière (3a, 3b) est pliée autour de la tige de support (5b, 5a).

9. Dispositif électronique pliable (16) comprenant :
- une première section de cadre (17a) et au moins une seconde section de cadre (17b),
- un écran pliable (18) fixé à une face avant de la première section de cadre (17a) et à une face avant de la seconde section de cadre (17b),
- un ensemble charnière (1) selon l'une quelconque des revendications 1 à 8,
- l'ensemble charnière (1) reliant la première section de cadre (17a) à la seconde section de cadre (17b) de telle sorte que la première section de cadre (17a) et la seconde section de cadre (17b) puissent pivoter l'une par rapport à l'autre,
la seconde section de cadre (17b) étant superposée sur la première section de cadre (17a) lorsqu'elle est pivotée vers une position d'extrémité pliée (P1),
la face avant de la seconde section de cadre (17b) étant alignée avec la face avant de la première section de cadre (17a) lorsqu'elle est pivotée vers une position d'extrémité dépliée (P2).

10. Dispositif électronique pliable (16) selon la revendication 9, dans lequel une distance (D1) entre un axe central (C1) de la tige de support (5a, 5b) et des axes centraux (C2) des tiges de pivot (6), reliées à une plaque de charnière (3a, 3b), est telle qu'un axe neutre (N) de l'écran pliable (18) se prolonge jusqu'à l'axe central (C2) des tiges de pivot (6).

11. Dispositif électronique pliable (16) selon la revendication 10, dans lequel tout désalignement entre l'axe neutre (N) de l'écran pliable (18) et les axes centraux (C2) des tiges de pivot (6) peut être compensé au moyen du réglage de la distance (D1) entre les axes centraux (C2) des tiges de pivot (6) et l'axe central (C1) de la tige de support (5a, 5b).

12. Dispositif électronique pliable (16) selon l'une quelconque des revendications 9 à 11, comprenant également un mécanisme à ressort (19) disposé entre chaque section de cadre (17a, 17b) et chaque ensemble charnière (1), permettant de faire varier une distance (D2) entre la première section de cadre (17a) et la seconde section de cadre (17b).

13. Dispositif électronique pliable (16) selon l'une quelconque des revendications 9 à 12, comprenant également une feuille de support flexible (20) agencée pour supporter une section pliable de l'écran pliable (18), la ou les tiges de support (5a, 5b) étant agencées pour supporter la feuille de support flexible (20).
